# EUROPEAN PATENT SPECIFICATION

(11) **EP 0 385 716 B1**
(45) Date of publication and mention of the grant of the patent: **21.02.1996**
(21) Application number: 90302061.8
(22) Date of filing: 27.02.1990
(51) Int. Cl.: B32B 17/10, C03C 27/12, C03C 17/38, C03C 17/42

(54) **Process for production of safety glass**
Verfahren zur Herstellung von Sicherheitsglas
Procédé pour la fabrication de verre de sécurité

(30) Priority: 28.02.1989 JP 47364/89
(43) Date of publication of application: 05.09.1990
(73) Proprietor: NIPPON ZEON CO., LTD., Tokyo (JP)
(72) Inventor: Hori, Toshihiko, Toshima-ku, Tokyo (JP); Nakamura, Eitaro, Chiyoda-ku, Tokyo (JP)
(74) Representative: Perry, Robert Edward

(56) References cited:
- EP-A- 0 157 646
- WO-A-84/04277
- DE-A- 1 297 832
- GB-A- 1 394 271
- US-A- 4 789 599

## Description

### BACKGROUND OF THE INVENTION

### 1. Field of the Invention

This invention relates to a safety glass suitable for automobiles and other vehicles and for construction, which gives minimized skin injury at the time of a collision, has a good penetration resistance, shock resistance, weatherability and optical characteristics, and can be continuously mass-produced.

### 2. Description of the Related Art

Glass laminates formed by laminating two glass sheets through an intervening polyvinyl butyral film and heat-pressing the laminate have been widely used as safety glasses for automobiles, construction, airplanes and the like. However, the safety glass of this type has a problem in that the skin is injured by broken pieces at the time of a collision, and as the means for eliminating this defect, there has been proposed a safety glass comprising a plastic film, such as a polyethylene terephthalate film, laminated on the surface, on the interior side, of the glass sheet through an intervening polyvinyl butyral film. In this safety glass sheet, since the plastic film which is not readily broken is arranged on the interior side, even if the glass sheet is broken, the risk of injuring the human body by broken glass pieces can be reduced. However, if this safety glass is allowed to stand under high-temperature and high-humidity conditions, foaming or whitening occurs in the polyvinyl butyral film and peeling occurs between the polyvinyl butyral film and the plastic film. Furthermore, where this safety glass is produced by the same procedures as adopted for the production of conventional laminated glass sheets, the productivity is low and the cost is high.

### SUMMARY OF THE INVENTION

The primary object of the present invention is to provide a safety glass having a good penetration resistance, heat-resistant stability, weatherability and adhesion processability and gives minimized skin injury at the time of a collision.

In accordance with the present invention, there is provided a process for the production of a safety glass, which comprises laminating a glass sheet and a plastic film through an intervening film-forming plastisol comprising an epoxy group-containing vinyl chloride resin as an indispensable component and heat-pressing the laminate.

### BRIEF DESCRIPTION OF THE DRAWINGS

Figure 1 shows a cross-section of an example of the safety glass of the present invention;
Fig. 2 shows a cross-section of another example thereof; and
Fig. 3 shows a cross-section of still another example thereof.

### DESCRIPTION OF THE PREFERRED EMBODIMENTS

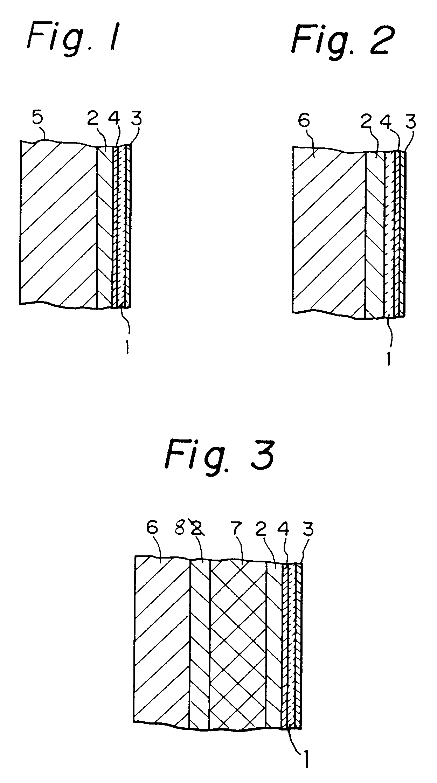

The glass sheet constituting the safety glass of the present invention may be a single glass sheet as shown in Figs. 1 and 2, or may be a laminated glass sheet formed by interposing an intermediate plastic film between two glass sheets and press-bonding the laminate, as shown in Fig. 3. The glass sheet shown in Fig. 1 comprises an untempered glass sheet 5 and a plastic film 1 having a hard surface coating 3 on one surface thereof and a heat ray-reflecting coating 4 on the other surface thereof. The plastic film 1 is adhered to the glass sheet 5 through an intermediate plastic film 2 comprising an epoxy group-containing vinyl chloride resin. The glass sheet shown in Fig. 2 comprises a tempered glass sheet 6 and a plastic film 1 having on one surface thereof a heat ray-reflecting coating 4 and a hard surface coating 3. The plastic film 1 is adhered to the glass sheet 6 through an intermediate plastic film 2 comprising an epoxy group-containing vinyl chloride resin. The glass sheet shown in Fig. 3 comprises a tempered glass sheet 6, a wire-net reinforced glass sheet 7, and two intermediate plastic films 2 and 8, one of which, 8, is sandwiched between the tempered glass sheet 6 and the wire-net reinforced glass sheet 7 and the other of which is adhered on the other surface of the wire-net reinforced glass sheet 7. The intermediate plastic film 2 has on one surface thereof a heat ray-reflecting coating 4 and a hard surface coating 3. The intermediate film 8 may be composed of, for example, polyvinyl butyral, polyurethane or an ethylene/vinyl acetate copolymer.

Alternatively, the glass sheet may be in the form of a pair of spaced glass sheets (not shown). The glass sheet may be flat or be bent into a desirable shape. If desired, the glass sheet may be subjected to semitempering processing, entire surface tempering processing or partial tempering processing. Especially where a single sheet glass as shown in Figs. 1 and 2 is used, an advantageous sheet is obtained by carrying out tempering processing to a degree desirable for the intended use. The glass sheet can be a transparent soda lime silicate glass sheet prepared by the usual floating method or other sheet glass-preparing method, such as an usual glass sheet or a heat ray-absorbing glass sheet.

A heat ray-reflecting film, a transparent electroconductive film for electrical heating, a transparent colored coating, an opaque colored coating, an electroconductive printed wire for electrical heating or an antenna wire may be partially or wholly formed on the glass sheet according to need. Decorative processing or other processing can be performed on the glass sheet.

As typical examples of the epoxy group-containing vinyl chloride resin, there can be mentioned (1) a copolymer derived from vinyl chloride, an epoxy group-containing monomer and a monomer copolymerizable therewith as an optional component, (2) a resin product prepared by adding an epoxy group to a vinyl chloride polymer, and (3) a resin product prepared by dispersing in a vinyl chloride homopolymer or copolymer an epoxy group-containing resin compatible therewith.

As examples of the epoxy group-containing monomer in the copolymer (1), there can be mentioned glycidyl ethers of unsaturated alcohols such as allyl glycidyl ether and methallyl glycidyl ether, glycidyl esters of unsaturated acids such as glycidyl methacrylate, glycidyl acrylate, glycidyl p-vinylbenzoate, methylglycidyl itaconate, glycidyl ethylmaleate, glycidyl vinylsulfonate and glycidyl (meth)allylphosphonate, and epoxide olefins such as butadiene monooxide, vinylcyclohexene monoxide, and 2-methyl-5,6-epoxyhexene. As examples of the monomer to be copolymerized with vinyl chloride and the epoxy group-containing monomer according to need, there can be mentioned vinyl esters of fatty acids such as vinyl acetate and vinyl propionate, olefins such as ethylene and propylene, vinylidene halides such as vinylidene chloride and vinylidene fluoride, vinyl ethers such as isobutyl vinyl ether, methyl vinyl ether and cetyl vinyl ether, and allyl compounds such as allyl chloride and methylallyl ether.

Methods known as the method for the polymerization of vinyl chloride, for example, the suspension polymerization method and the emulsion polymerization method, can be adopted for obtaining the epoxy group-containing vinyl chloride resin used in the present invention. For example, when the epoxy group-containing vinyl chloride resin is intended for use in the form of a plastisol, to maintain the flowability of the plastisol, the emulsion polymerization method or micro suspension polymerization method recommended as the method for the production of a vinyl chloride resin for the paste processing is preferably adopted.

In the epoxy group-added vinyl chloride polymer resin (2), the term "vinyl chloride polymer" to which an epoxy group is to be added means a vinyl chloride homopolymer and a copolymer of vinyl chloride with the above-mentioned optional monomer copolymerizable with vinyl chloride.

As the method of adding an epoxy group to the vinyl chloride polymer, there can be mentioned a method in which the vinyl chloride polymer is dehydrochlorinated by a heat treatment or a contact with an alkali compound and is then epoxidized by an organic peracid.

In the resin product (3), the term "epoxy group-containing resin" to be dispersed in a vinyl chloride polymer means a copolymer of an epoxy group-containing monomer with a monomer copolymerizable therewith. As the epoxy group-containing monomer and the copolymerizable monomer, there can be mentioned those listed with regard to the epoxy group-containing vinyl chloride copolymer (1).

In the epoxy group-containing vinyl chloride resin, the content of epoxy groups is 0.5 to 10% by weight, preferably 1.0 to 5.0% by weight based on the epoxy-group containing vinyl chloride resin. If the epoxy group content is lower than 0.5% by weight, the adhesion to a glass sheet is poor, and if the epoxy group content exceed 10% by weight, the penetration resistance of the formed safety glass becomes poor.

The degree of polymerization of the epoxy group-containing vinyl chloride resin is preferably 600 to 3,000. If the degree of polymerization is lower than 600, the penetration resistance of the glass laminate is too low, and if the degree of polymerization is higher than 3,000, a large quantity of heat becomes necessary for forming a film from the vinyl chloride resin, resulting in increase of the manufacturing cost.

A plastic film having a high transparency and an excellent smoothness, such as a polyethylene terephthalate film, a polycarbonate film, a polyamide film or a polyurethane film, is preferably used as the plastic film in the present invention. A polyethylene terephthalate film is especially preferable as the plastic film as the exposed surface of a safety glass because the transparency is high, the film has a high transparency, no haze, and an appropriate toughness.

To improve the scratch resistance or abrasion resistance of the exposed surface of the plastic film for the exposed surface of a safety glass, a hard surface coating 3 or a self-recovering surface-coating capable of repairing a scratch is formed on the exposed surface of the plastic film as shown in Figs. 1, 2 and 3. As the hard surface coating of the former type, there can be mentioned a hardened coating of an organic polysiloxane, an inorganic silica coating, a composite coating of inorganic silica and an organic polysiloxane, and a cured melamine resin coating. As the self-recovering surface coating of the latter type, there can be mentioned a heat-cured urethane coating such as a partially crosslinked aliphatic polyurethane coating, and a thermoplastic urethane coating.

Furthermore, to prevent the deterioration by water or reflect heat rays, a coating of a metal oxide such as tin oxide, titanium oxide, indium oxide, chromium oxide or cobalt oxide or a coating of a metal such as silver, gold, platinum, copper, aluminum or chromium, or an alloy thereof can be used. This coating is shown by reference numeral 4 in Figs. 1, 2, and 3.

In general, the glass sheet may be an untempered glass sheet, and an appropriate combination of glass sheets can be used according to the intended use of the safety glass. For example, where it is not desired that the glass sheet is easily broken, a tempered glass sheet, a glass laminate comprising a tempered glass sheet, or a partially tempered glass sheet can be used. If it is desired that a heat-insulating property or acoustic property is imparted to the safety glass, a pair of spaced glass sheets, a pair of spaced glass laminates, or a pair of spaced tempered glass sheets can be used.

A plasticizer, a stabilizer, an ultraviolet absorber, an antioxidant, a lubricant, a filler or a colorant can be incorporated in the epoxy group-containing vinyl chloride resin used in the present invention according to the intended use. Furthermore, the epoxy group-containing vinyl chloride resin can be mixed with a resin compatible therewith, such as other vinyl chloride resins, an methacrylic resin or an epoxy resin.

A variety of plasticizers for polyvinyl chloride resins can be used as the plasticizer. For example, there can be mentioned aliphatic plasticizers such as dioctyl adipate, butyl diglycol adipate, dioctyl azelate, dibutyl sebacate, and diisodecyl adipate; phthalate plasticizers such as dioctyl phthalate, dibutyl phthalate, diisobutyl phthalate, butylbenzyl phthalate, dilauryl phthalate and diheptyl phthalate; and phosphate and phosphite plasticizers such as trixylenyl phosphate, tricresyl phosphate, cresyldiphenyl phosphate, trischloroethyl phosphate, trischloroethyl phosphite, and tributyl phosphate. Furthermore, epoxy derivatives such as epoxidized soybean oil and a monoester of an epoxy fatty acid can be used. Polyester plasticizers can be used in some cases. Preferably, the amount of the plasticizer incorporated is 20 to 80 parts by weight per 100 parts by weight of the vinyl chloride resin. If the amount of the plasticizer is too large, the strength of the film becomes low, and if the amount of the plasticizer is too small, the film becomes hard.

As the heat stabilizer, there are preferably used alkylated tin compounds of fatty acids such as butyl-tin laurate, butyl-tin maleate and octyl-tin maleate, and alkyl-tin-containing sulfur compounds such as di-n-octyl-tin bis(isooctyl thioglycolate). Metal soap stabilizers can be used in combination with these heat stabilizers.

A benzotriazole ultraviolet absorber is excellent as the ultraviolet absorber. For example, 2-(2′-hydroxy-5′-methylphenyl)benzotriazole, 2-(2′-hydroxy-3′-tert.-butyl-5′-methylphenyl)-5-chlorobenzotriazole, 2-(2′-hydroxy-3′,5′-tert.-butylphenyl)-5-chlorobenzotriazole and 2-(2′-hydroxy-4′-octoxyphenyl)benzotriazole are preferably used.

A phenolic antioxidant is excellent as the antioxidant. For example, there can be mentioned 2,6-di-tert.-butyl-p-cresol, 2,2′-methylene-bis(4-methyl-6-tert.-butylphenol), 4,4′-butylidene-bis(3-methyl-6-tert.-butylphenol) and 4,4′-thiobis(3-methyl-6-tert.-butylphenol).

Furthermore, a crosslinking agent, a thickener, a diluent and a silane or titanate coupling agent can be incorporated.

The intervening film-forming plastisol can be prepared by mixing the epoxy group-containing vinyl chloride resin, the plasticizer, and various additives and deaerating the mixture by the customary procedures. Since the plastisol is liquid, dusts and foreign matters can be removed by using a filter or the like and the pipe transportation can be performed by using a closed system such as a tank or a pipe line. Therefore, almost as foreign matter is incorporated into the plastisol, the quality control of the plastisol can be easily accomplished, and the handling of the plastisol is suitable for automation.

The known film lamination method can be adopted for laminating the plastisol or plastic film on the glass sheet. For example, the plastisol is coated on the glass sheet by using a coater such as a blade coater, a roll coater, a screen coater, a flow coater or a spray coater and the plastic film is applied onto the coated plastisol so that bubbles are not left, and the above operations are repeated according to need and the lamination is completed. The amount of the film-forming plastisol applied is preferably such that the plastisol coating has a thickness of 0.1 to 1 mm.

The laminated safety glass is heated to gel the plastisol layer to a strong elastic film. A heating device customarily used for the paste processing, such as a hot air-circulating heater, an infrared or far-infrared heater, a dielectric heater or an induction heater, can be used as the heating means.

Furthermore, since the plastisol is filled so that bubbles are not incorporated, a high-pressure heating device such as an autoclave becomes necessary.

As is apparent from the foregoing description, according to the present invention, a safety glass having an excellent penetration resistance, heat-resistant stability, adhesion, and transparency and giving minimized skin injury at the time of breaking can be produced at a high productivity.

The present invention will now be described in detail with reference to the following examples. In the examples and comparative examples, all of "parts" and "%" are by weight unless otherwise specified.

### Example 1

In a vacuum type high-speed deaerating mixer, 100 parts of an epoxy group-containing vinyl chloride copolymer resin comprising 90% of vinyl chloride and 10% of glycidyl methacrylate and having an average particle diameter of 1 µm and an average degree of polymerization of 800 was mixed with 15 parts of dioctyl phthalate, 45 parts of dioctyl adipate, 4 parts of dibutyl-tin polymercaptide, and 0.3 part of 2,2′-methylene-bis(4-methyl-6-tert.-butylphenol), and the mixture was deaerated.

Then, 100 parts of a vinyl chloride/ethylene copolymer comprising 95% of vinyl chloride units and 5% of ethylene units and having an average degree of polymerization of 1,200 was mixed with 10 parts of dioctyl phthalate, 30 parts of dioctyl adipate, 4 parts of dibutyl-tin polymercaptide and 0.3 part of 2,2′-methylene-bis(4-methyl-6-tert.-butylphenol), and the mixture was transferred onto a two-roll kneader heated at 150°C and kneaded for 5 minutes to obtain a transparent pliable film having a thickness of 0.6 mm.

The above-mentioned epoxy group-containing vinyl chloride resin plastisol was coated in a thickness of 100 µm on a glass sheet having a size of 300 mm x 300 mm x 3 mm (thickness) by a blade coater, and the above-mentioned vinyl chloride/ethylene copolymer film was applied onto the plastisol coating so that foams were not left. Then, the above-mentioned vinyl chloride resin plastisol was coated in a thickness of 50 µm on the vinyl chloride/ethylene copolymer film by a blade coater. Finally, a polyethylene terephthalate film having a hard surface coating of a polysiloxane was applied onto the plastisol coating so that foams were not left, whereby an intended laminate was obtained. Then, the laminate was heated at 180°C for 10 minutes to obtain a transparent safety glass having no foams.

### Example 2

A safety glass was prepared in the same manner as described in Example 1 except that a tempered glass sheet was used instead of the glass sheet used in Example 1.

### Example 3

The plastisol used in Example 1 was coated in a thickness of 50 µm on a commercially available glass laminate having a size of 300 mm x 300 mm (the thickness of the glass sheet was 3 mm and the thickness of the polyvinyl butyral film was 0.76 mm) by using a roll coater, and a polyethylene terephthalate film having a hard surface coating of a polysiloxane was applied onto the plastisol coating so that foams were not left, whereby an intended laminate was obtained. The laminate was heated at 180°C for 10 minutes to obtain a safety glass.

### Comparative Example 1

A commercially available intermediate film (polyvinyl butyral) having a thickness of 0.8 mm (30 mil) for a glass laminate was conditioned so that the water content was 0.5% by weight, and the film was interposed between a pair of glass sheets having a size of 300 mm x 300 mm x 3 mm (thickness), and the assembly was passed through between rubber rollers maintained at 70 to 75°C to effect preliminary press bonding. Then, the laminate was heat-pressed for 30 minutes in a pneumatic autoclave maintained at 130°C and 13 to 15 kg/cm² to obtain a glass laminate having no foams.

### Comparative Example 2

A polyvinyl butyral film having a thickness of 0.4 mm (15 mil) was conditioned so that the water content was 0.5% by weight, and was placed on the glass laminate obtained in Comparative Example 1, and a polyethylene terephthalate film and a cover glass sheet having a thickness of 2 mm were laminated on the polyvinyl butyral film. The laminate was charged in a preliminary press-bonding bag, the pressure in the bag was reduced to 1.33 x 10⁴ Pa (100 mmHg), and the laminate was maintained at 100°C for 30 minutes. The cover glass sheet was removed to obtain a safety glass.

To examine the performances of the safety glasses obtained in Examples 1 through 3 and Comparative Examples 1 and 2, the transparency, penetration resistance and adhesion were measured according to the following methods based on "Test Methods for Automobile Safety Glass" of JIS R-3212. The results are shown in Table 1.

### (1) Transparency (Visible Ray Transmittance)

The transmittance was measured in the region of from 380 nm to 750 nm by a spectrophotometer supplied by Hitachi Ltd.

### (2) Penetration Resistance

The safety glass laminate was allowed to stand in an atmosphere maintained at 20°C for 2 hours, and a steel ball having a weight of 2.27 kg was dropped onto the center of the glass-exposed surface of the safety glass from a height of 4 mm and the presence or absence of penetration was checked.

### (3) Adhesion

The safety glass laminate was allowed to stand for 2 hours in an atmosphere maintained at 23°C, and a steel ball having a weight of 227 g was dropped from a height of 9 mm on the glass laminate on the glass-exposed surface of the safety glass. The total weight of the glass peeled from the surface on the side opposite to the side of the shocked surface.

The evaluation results are shown in Table 1. From the results shown in the table, it is seen that the glass laminate of the present invention has performances required for a safety glass.

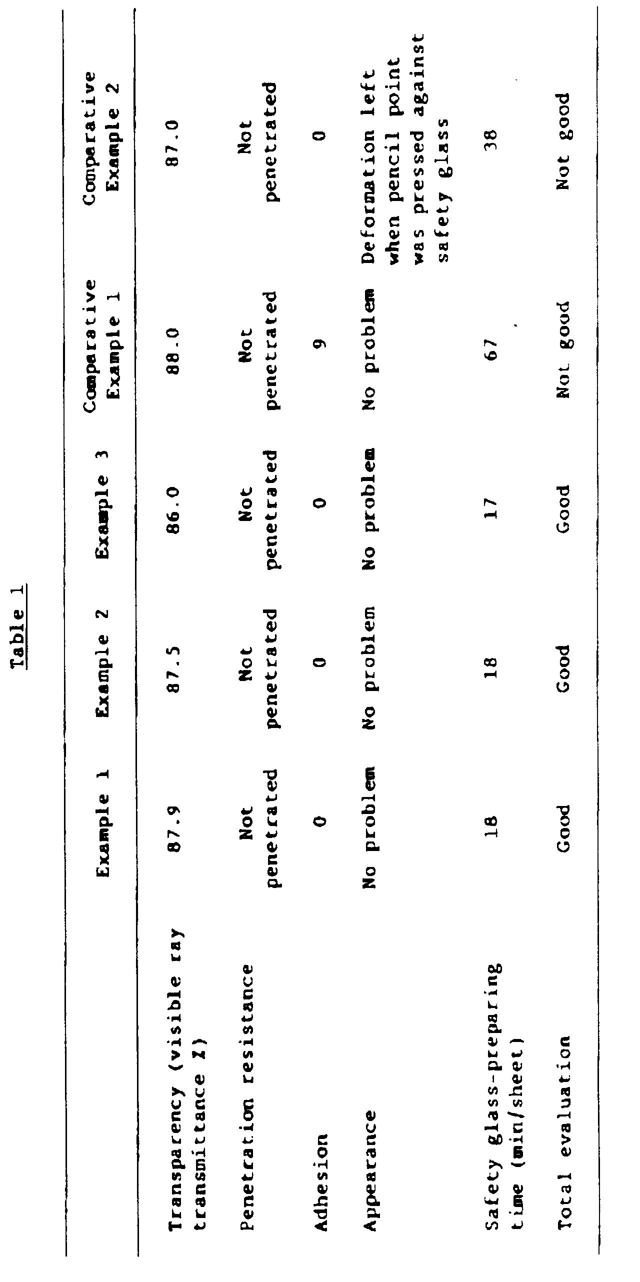

## Claims

1. A process for the production of a safety glass, which comprises laminating a glass sheet and a plastic film through an intervening film-forming plastisol comprising an epoxy group-containing vinyl chloride resin as an indispensable component and heat-pressing the laminate.

2. The process according to claim 1, wherein the epoxy group-containing vinyl chloride resin is a copolymer of vinyl chloride with an epoxy group-containing monomer selected from the group consisting of glycidyl ethers of unsaturated alcohols, glycidyl esters of unsaturated acids, and epoxide olefins.

3. The process according to claim 1, wherein the epoxy group-containing vinyl chloride resin is a vinyl chloride resin product prepared by a method wherein a vinyl chloride homopolymer or copolymer is dehydro-chlorinated by a heat treatment or a contact with an alkali compound and is then epoxidized by an organic peracid.

4. The process according to claim 1, wherein the epoxy group-containing vinyl chloride resin is a vinyl chloride resin product prepared by dispersing in a vinyl chloride homopolymer or copolymer an epoxy group-containing resin compatible with the vinyl chloride homopolymer or copolymer.

5. The process according to claim 1, wherein the content of epoxy groups in the vinyl chloride resin is 0.5 to 10% by weight based on the vinyl chloride resin.

6. The process according to claim 1, wherein the epoxy group-containing vinyl chloride resin has a degree of polymerization of 600 to 3,000.

7. The process according to claim 1, wherein the plastic film is made of polyethylene terephthalate, polycarbonate, polyamide or polyurethane.

8. The process according to claim 1, wherein the plastic film has a hard surface coating or a self-recovering surface coating on the surface opposite to the surface to be adhered to the glass sheet.

9. The process according to claim 8, wherein the hard surface coating is selected from the group consisting of a hardened coating of an organic polysiloxane, an inorganic silica coating, a composite coating of inorganic silica and an organic polysiloxane, and a cured melamine resin coating.

10. The process according to claim 8, wherein the self-recovering surface coating is a partially cross-linked aliphatic polyurethane coating or a thermoplastic urethane coating.

11. The process according to claim 1, wherein the plastic film has a metal or metal oxide coating.

12. The process according to claim 1, wherein the glass sheet is at least one member selected from the group consisting of an untempered glass sheet, a tempered glass sheet, a partially tempered glass sheet, a sandwich glass sheet, a laminated glass sheet, and a pair of spaced glass sheets.

13. The process according to claim 1, wherein the epoxy group-containing vinyl chloride resin contains 20 to 80 parts by weight of a plasticizer per 100 parts by weight of the resin.

## Patentansprüche

1. Verfahren zur Herstellung von Sicherheitsglas, umfassend die Laminierung einer Glasplatte mit einem Kunststofffilm durch ein dazwischenliegendes filmbildendes Plastisol, das ein Epoxygruppen-enthaltendes Vinylchloridharz als unerläßliche Komponente enthält, und die Hitzeverpressung des Laminats.

2. Verfahren nach Anspruch 1, dadurch **gekennzeichnet,** daß das Epoxygruppen-enthaltende Vinylchloridharz ein Copolymeres von Vinylchlorid mit einem Epoxygruppen-enthaltenden Monomeren, ausgewählt aus der Gruppe, bestehend aus Glycidylethern von ungesättigten Alkoholen, Glycidylestern von ungesättigten Säuren und Epoxidolefinen, ist.

3. Verfahren nach Anspruch 1, dadurch **gekennzeichnet,** daß das Epoxygruppen-enthaltende Vinylchloridharz ein Vinylchloridharzprodukt, hergestellt durch ein Verfahren, bei dem ein Vinylchlorid-Homopolymeres oder -Copolymeres durch Hitzebehandlung oder durch Kontakt mit einer Alkaliverbindung dehydrochloriert und sodann durch eine organische Persäure epoxidiert wird, ist.

4. Verfahren nach Anspruch 1, dadurch **gekennzeichnet,** daß das Epoxygruppen-enthaltende Vinylchloridharz ein Vinylchloridharzprodukt ist, das durch Dispergierung eines Epoxygruppen-enthaltenden Harzes, das mit dem Vinylchorid-Homopolymeren oder -Copolymeren verträglich ist, in einem Vinylchorid-Homopolymeren oder -Copolymeren hergestellt ist.

5. Verfahren nach Anspruch 1, dadurch **gekennzeichnet,** daß der Gehalt der Epoxygruppen in dem Vinylchloridharz 0,5 bis 10 Gew.-%, bezogen auf das Vinylchloridharz, beträgt.

6. Verfahren nach Anspruch 1, dadurch **gekennzeichnet,** daß das Epoxygruppen-enthaltende Vinylchloridharz eine Polymerisationsgrad von 600 bis 3.000 hat.

7. Verfahren nach Anspruch 1, dadurch **gekennzeichnet,** daß der Kunststoffilm aus Polyethylenterephthalat, Polycarbonat, Polyamid oder Polyurethan hergestellt ist.

8. Verfahren nach Anspruch 1, dadurch **gekennzeichnet,** daß der Kunststoffilm einen harten Oberflächenüberzug oder einen sichselbsterholenden Oberflächenüberzug auf der Oberfläche, die der mit der Glasplatte zu verklebenden Oberfläche gegenüberliegt, aufweist.

9. Verfahren nach Anspruch 8, dadurch **gekennzeichnet,** daß der harte Oberflächenüberzug aus der Gruppe, bestehend aus einem gehärteten Überzug eines organischen Polysiloxans, einem anorganischen Kieselsäureüberzug, einem Verbundüberzug aus anorganischer Kieselsäure und einem organischen Polysiloxan und einem gehärteten Melaminharzüberzug, ausgewählt ist.

10. Verfahren nach Anspruch 8, dadurch **gekennzeichnet,** daß der sichselbsterholende Oberflächenüberzug ein Überzug aus einem teilweise vernetzten aliphatischen Polyurethanharz oder ein Überzug aus einem thermoplastischen Urethanharz ist.

11. Verfahren nach Anspruch 1, dadurch **gekennzeichnet,** daß der Kunststoffilm einen Metall- oder Metalloxidüberzug aufweist.

12. Verfahren nach Anspruch 1, dadurch **gekennzeichnet,** daß die Glasplatte mindestens ein Material, ausgewählt aus der Gruppe, bestehend aus einer nichtgetemperten Glasplatte, einer getemperten Glasplatte, einer teilweise getemperten Glasplatte, einer Sandwich-Glasplatte, einer laminierten Glasplatte und einem Paar von im Abstand angeordneter Glasplatten, ist.

13. Verfahren nach Anspruch 1, dadurch **gekennzeichnet,** daß das Epoxygruppen-enthaltende Vinylchloridharz 20 bis 80 Gew.-% Weichmacher pro 100 Gew.-Teile Harz enthält.

## Revendications

1. Procédé pour la fabrication d'un verre de sécurité, qui consiste à stratifier une feuille de verre et un film de plastique au moyen d'un plastisol formant un film intermédiaire, qui comprend, comme composant indispensable, une résine de chlorure de vinyle contenant un groupe époxy, et à comprimer à chaud le stratifié.

2. Procédé selon la revendication 1, dans lequel la résine de chlorure de vinyle contenant un groupe époxy est un copolymère de chlorure de vinyle et d'un monomère contenant un groupe époxy choisi dans le groupe constitué d'éthers glycidyliques d'alcools insaturés, d'esters glycidyliques d'acides insaturés, et d'oléfines à fonction époxy.

3. Procédé selon la revendication 1, dans lequel la résine de chlorure de vinyle contenant un groupe époxy est un produit à base de résine de chlorure de vinyle préparé par un procédé suivant lequel un homopolymère ou un copolymère de chlorure de vinyle est déshydrochloré par traitement thermique ou par contact avec un composé alcalin, et est ensuite époxydé par un peracide organique.

4. Procédé selon la revendication 1, dans lequel la résine de chlorure de vinyle contenant un groupe époxy est un produit à base de résine de chlorure de vinyle préparé en dispersant dans un homopolymère ou un copolymère de chlorure de vinyle une résine contenant un groupe époxy compatible avec l'homopolymère ou le copolymère de chlorure de vinyle.

5. Procédé selon la revendication 1, dans lequel la teneur en groupes époxy dans la résine de chlorure de vinyle est comprise entre 0,5 et 10% en poids par rapport à la résine de chlorure de vinyle.

6. Procédé selon la revendication 1, dans lequel la résine de chlorure de vinyle contenant un groupe époxy a un degré de polymérisation compris entre 600 et 3 000.

7. Procédé selon la revendication 1, dans lequel le film de plastique est constitué de polyéthylène-téréphtalate, de polycarbonate, de polyamide ou de polyuréthane.

8. Procédé selon la revendication 1, dans lequel le film de plastique présente un revêtement de surface dur ou un revêtement de surface auto-régénérant sur la surface opposée à la surface devant être collée à la feuille de verre.

9. Procédé selon la revendication 8, dans lequel le revêtement de surface dur est choisi dans le groupe constitué d'un revêtement durci d'un polysiloxane organique, d'un revêtement de silice minérale, d'un revêtement composite de silice minérale et d'un polysiloxane organique, et d'un revêtement de résine de mélamine polymérisée.

10. Procédé selon la revendication 8, dans lequel le revêtement de surface auto-régénérant est un revêtement de polyuréthane aliphatique partiellement réticulé ou un revêtement d'uréthane thermoplastique.

11. Procédé selon la revendication 1, dans lequel le film de plastique présente un revêtement de métal ou d'oxyde métallique.

12. Procédé selon la revendication 1, dans lequel la feuille de verre est au moins un élément choisi dans le groupe constitué d'une feuille de verre non trempé, d'une feuille de verre trempé, d'une feuille de verre partiellement trempé, d'une feuille de verre en sandwich, d'une feuille de verre feuilleté et d'une paire de feuilles de verre espacées.

13. Procédé selon la revendication 1, dans lequel la résine de chlorure de vinyle contenant un groupe époxy contient de 20 à 80 parties en poids d'un plastifiant pour 100 parties en poids de résine.
